# EUROPEAN PATENT APPLICATION

(11) **EP 4 342 722 A1**
(43) Date of publication of application: **27.03.2024**
(21) Application number: 22196700.3
(22) Date of filing: 20.09.2022
(51) Int. Cl.: B60L 53/35, B60L 5/24

(54) **POSITIONING SYSTEM FOR AN AUTOMATIC VEHICLE CHARGING SYSTEM**

(71) Applicant: ABB E-Mobility B.V., 2629 JG Delft (NL)
(72) Inventor: FIOLEK, Robert, 31-873 Krakow (PL)
(74) Representative: Maiwald GmbH

(57) **Abstract**

The invention relates to a positioning system (100) for an automatic vehicle charging system (150). The positioning system comprises charger-side positioning modules (114, 116) arranged on a charger (110), and a charger-side control unit (112). The charger-side positioning modules comprise a static master module (114) and at least two slave modules (116) connected to the static master module. The charger-side control unit is connected to the static master module. The static master module is configured to receive a charging request from a vehicle to be charged, wherein the charging request contains an ID of the vehicle, to receive distances to a mobile module (134) measured by the charger-side positioning modules, to determine a position of the mobile module using the measured distances, and to the position of the mobile module (134) to the charger-side control unit (112). The charger-side control unit (112) is configured to provide the allowance for charging the vehicle (500) if the position of the mobile module (134) is within a pre-defined tolerance with respect to a reference position and if the ID of the vehicle of which the position has been determined matches with the ID in the charging request.

## Description

### Technical Field

The invention relates to a positioning system for an automatic vehicle charging system, an electric vehicle charging system for charging automatically a vehicle, a method for providing an allowance for charging an electrical driven vehicle by a positioning, and a use of a positioning system.

### Background

Electric buses use the pantograph for high power charging. To start a charging session the driver must park the bus exactly under the pantograph. The bus also should be identified in the system. It is important that the bus has a good position in relation with the pantograph, so that the pantograph can make physical contact with the charge interface rails on the roof of the bus. In general, the bus has a certain freedom degree to position under the pantograph in a range of 20...30 cm in both directions typically. In addition, weather resistance such as temperature changes, direct sunlight, rain, snow, hail and dust should characterize the system. No additional installation on the bus side is welcome. Current systems do not manage to assist in parking the bus under the pantograph with the required accuracy. Infrared, ultrasound or video systems are prone to atmospheric action. Localization based on WiFi can locate with precision up to several meters and is prone to reflection from local environment.

### Summary of the invention

There may be a desire to provide an improved positioning system for an automatic vehicle charging system.

The problem is solved by the subject-matter of the independent claims. Embodiments are provided by the dependent claims, the following description and the accompanying figures.

The described embodiments similarly pertain to the automatic vehicle charging system, the electric vehicle charging system for charging automatically a vehicle, the method for providing an allowance for charging an electrical driven vehicle by a positioning, and the use of a positioning system. Synergetic effects may arise from different combinations of the embodiments although they might not be described in detail.

Further on, it shall be noted that all embodiments of the present invention concerning a method might be carried out with the order of the steps as described, nevertheless this has not to be the only and essential order of the steps of the method. The herein presented methods can be carried out with another order of the disclosed steps without departing from the respective method embodiment, unless explicitly mentioned to the contrary hereinafter.

Technical terms are used by their common sense. If a specific meaning is conveyed to certain terms, definitions of terms will be given in the following in the context of which the terms are used.

According to a first aspect, a positioning system for an automatic vehicle charging system is provided. The positioning system comprises charger-side positioning modules arranged on a charger, and a charger-side control unit. The charger-side positioning modules comprise a static master module and at least two slave modules connected to the static master module. The charger-side control unit is connected to connected to the static master module. The static master module is configured to receive a charging request from a vehicle to be charged, wherein the charging request contains an ID of the vehicle. The static master module is further configured to receive distances to a mobile module measured by charger-side positioning modules, to determine a position of the mobile module using the measured distances by means of, for example, a trilateration algorithm, and to provide the position of the mobile module to the charger-side control unit. The charger-side control unit is configured to provide an allowance for charging the vehicle. This allowance is only provided only if the position of the mobile module is within a pre-defined tolerance with respect to a reference position and if the ID of the vehicle of which the position has been determined matches with the ID in the charging request.

Supposed, there are several vehicles nearby the charger. The charging spot may be for example at the same time a parking spot for the vehicle. One of them may approach the charger. However, this vehicle may have no need for charging. The charger detects, that there is a vehicle on the charging spot. Usually the charging would be initiated. However, according to the above-mentioned aspect, the vehicle will only be charged if the vehicle has requested the charging and if the charger has checked and verified, that the vehicle on the charging spot is indeed the vehicle that has sent the charging request. For that, the master module of the positioning system receives the charging request, for example via n wireless communication, that contains an ID of the vehicle, and when measuring the distances and determining the position, the ID of the vehicle for which the measurements have been performed, are compared. Only if the IDs match and the position is within a pre-determined area corresponding to a pre-defined tolerance, the positioning system provides a signal to the charger that allows charging the vehicle. The tolerance is defined with respect to a reference position. The reference position may be a fixed position in the coordinate system defined by the charger-side positioning modules. For example, reference position is the position in which the center of the pantograph's rails meets the center of the vehicle rails. Any offset from this position defines the tolerance.

The positioning system comprises components arranged at the charger or inside the charger and components arranged at the vehicle or inside vehicle. To distinguish between the locations of these components, the terms "vehicle-side" and "charger-side" are used herein.

Under the term "module", a component such as a device, a unit or an electronic circuit of a system is understood. The term "module" has further the meaning of "modular". That is, especially in case of the positioning modules, modules may be added or removed, for example, to improve the measurements or to save costs.

The term "static" master module is used to express that the master module is not moved, in contrast to the "mobile" module. Since there is only one master module, the term "master module" refers always to the "static master module" and means therefore the same device.

According to an embodiment, the positioning system further comprises a charger-side communication module connected to the static master module and configured to receive the charging request from a vehicle-side communication module of the vehicle via a wireless communication.

The communication module, such as a WiFi module, is not involved in the measurements. That is, they represent two different subsystem. The first one is responsible for the measurements to determine the position of the mobile module, and the second one is responsible for the communication.

According to an embodiment, the static master module is configured, upon receiving the charging request from the vehicle, to send a distance measurement request to the slave modules.

The master module has an interface to the communication module and to the slave modules. When receiving the charging request from the communication module, the master module sends a signal such a message or a command to the slave modules to perform distance measurements. The master module receives the measurements from the slave modules and calculates the position. The master module has a further interface to a charger controller, to which the control unit sends the allowance for charging the vehicle if the conditions regarding the position and ID are fulfilled.

The charger-side control unit may be a controller such as a microcontroller, an FPGA, a CPLD, or any other logic. The logic may be programmable. The charger-side control unit may be a stand-alone device, a circuit on a common PCB, or it may be integrated into the static master module. However, the logic of the static master module may vice versa also be implemented in the charger-side control unit, which may be located inside a housing of the static master module or outside as an extra device. Therefore, the master module logic and the charger-side control unit may consist of fully or in parts the same hardware, or of separate hardware.

According to an embodiment, the static master module is configured to determine a distance to the mobile module, and to send the distance measurement request to the slave modules only if the distance between the static master module and the mobile module is below a predefined value.

This embodiment defines a further possible requirement. The master module first checks, whether its distance to the mobile module is below a pre-defined value. The predefined value can be stored in an internal memory of the master module or in an external memory of the master module to which the master module is connected for access. The pre-defined value may be, for example, 3 meters, 5 meters or 10 meters.

According to an embodiment, the static master module is further configured to initially, scan for mobile modules in range and detect the IDs of vehicles associated to the respective mobile modules, to determine a distance to all mobile modules in range, and to create a presence table filled with the detected IDs for mobile modules whose distance to the static master module is below a pre-defined value. The static master module is further configured, after receiving the charging request, to determine the positions of the mobile modules in the presence table one after another and to provide the positions to the charger-side control unit. The charger-side control unit is further configured to compare the ID of the vehicle for which currently the position is determined with the ID contained in the charging request and to provide the allowance for charging the vehicle only if additionally to the position of the vehicle to be within a pre-defined tolerance, also the ID contained in the request matches with the ID for the vehicle for which currently the position is determined.

The charger-side positioning modules and the vehicle-side positioning modules may not have a communication connection to the each other. The communication between the vehicle subsystem and the charger subsystem is therefore performed via the wireless communication module. Nevertheless, it is possible for the static master module unit to receive information about the mobile module or bus such as the ID from the measurements, which it may provide to the charger-side control unit. For example, the measurements may be performed using time of flight measurements of messages. The messages may be organized in Frames where, for example the time tag of the send time and an address or ID of the mobile unit may be transmitted. Either one-way or round-trip measurements may be applied. In case of round trip measurements, the charger-side control unit has the possibility to control the point of time of the measurements. In case of one-way measurements, the mobile module responses actively. Since there may be several vehicles in the range of the charger and therefore several mobile modules, a multiple access protocol has to be used such as TDMA or CSMA. Here, according to an embodiment, CSMA is the preferred protocol used for the measurements because it requires less coordination for the unknown number of mobile modules and unwanted air traffic is avoided. Further, CSMA allows for quicker response of the system as TDMA used in regular UWB systems. The ID transmitted in the Frames may be directly used as the ID of the vehicle.

According to an embodiment, the static master module is further configured to receive repeatedly distances measured by the slave modules and to determine repeatedly the position, and to use a median filter over the repeatedly determined positions for determining a final position.

In principle, when performing several distance measurements from one charger-side-positioning module to a mobile module, or calculating the positions, any suitable statistical filter know from positioning and navigation may be used.

In embodiments, not only the single distances are measured repeatedly, but also the determination of the position is repeated. As a result, filters for the movement of the vehicle such as Kalman-Filter may be applied. Further, the distances can be corrected.

According to an embodiment, the control unit is further configured to receive all measured distances using an RS485 bus.

Using the RS485 bus allows for fast data transfer and resistant to interference.

According to an embodiment, the static master module and the plurality of slave modules are modules according to the IEEE Ultra Wide Band (UWB)-standard, and the charger-side wireless communication module is a WiFi device.

Accordingly, the mobile unit on the vehicle is a corresponding UWB module, and the vehicle-side wireless communication module is a corresponding UWB module. A release of this standard is for example the IEEE 802.15.x UWB standard, where x is, for example 3a, 4a or other releases.

According to an embodiment, the electric driven vehicle is a bus or a truck.

The system described herein may, however, be applied to other vehicles that are to be charged using a pantograph.

According to a further aspect, an electric vehicle charging system for charging automatically a vehicle is provided. The electric vehicle charging system comprises a positioning system and a charger-side control unit as described herein, and further comprises a pantograph including an actuator and a charger controller. The charger controller is configured to receive an allowance from the charger-side control unit to charge the vehicle, to control the actuator of the pantograph to get in contact with the electric driven vehicle, and to provide the charging current for charging a battery of the electric driven vehicle.

By controlling the actuator, the actuator moves the pantograph to connect with rails or bars on the vehicle that are connected via wires to the battery of the vehicle. Once the connection is stable, the charger controller starts charging the battery. In this disclosure instead of "charging the battery of the vehicle", also the short expression "charging the vehicle" is used.

According to a further aspect, an electric driven vehicle is provided. The electrical driven vehicle comprises a mobile module of the positioning system that is described herein. The mobile module is configured to response for distance measurement requests sent from a static master module and/or a slave module. The electrical driven vehicle further comprises a vehicle-side control unit configured to send a charging request, wherein the charging request includes an ID of the electrical driven vehicle, and a battery configured to be connected to a pantograph if a position, for example, the position of the mobile module or the vehicle, determined by the positioning system is within a pre-defined tolerance with respect to a reference position, for example, the center of the pantograph's rails meets the center of the vehicle rails, and if the ID of the vehicle of which the position has been determined matches (206) with the ID in the charging request.

The distance measurement signals are for example frames according to the UWB-standard. The mobile module may use CSMA as access technology. The vehicle-side control unit may be integrated into the mobile module.

According to an embodiment, the electrical driven vehicle further comprises a vehicle-side wireless communication module. The vehicle-side control unit is further configured to cause the vehicle-side wireless communication module to send a charging request, the charging request containing a vehicle ID that is detectible by a charger-side control unit of the positioning system. The sending of the vehicle ID may be a pre-requisite for the battery to get charged.

The communication module may be, for example, a WiFi or a Bluetooth module, or a communication device of any other suitable standard.

The vehicle side control module may detect itself that the battery has to be charged by the charger, or it may comprise a user interface such that a driver of the bus can initiate the charging request.

According to a further aspect, a method for providing an allowance for charging an electrical driven vehicle by a positioning system as described herein is presented. The positioning system comprises a plurality of charger-side positioning modules comprising a static master module and at least two slave modules connected to the static master module, and a charger-side control unit. The static master module receives a charging request from the electric driven vehicle to be charged, receives distances to at least the mobile module measured by the charger-side positioning modules, determines a position of the mobile module and provides the positions to the charger-side control unit. The charger-side control unit compares the ID of the vehicle for which currently the position is determined with the ID contained in the charging request and provides an allowance for charging the electric driven vehicle if the position of the mobile module is within a pre-defined tolerance with respect to a reference position and if the ID of the vehicle of which the position has been determined matches with the ID in the charging request.

The allowance is a signal, e.g., an analog or digital signal, or a flag in a data memory or a register of a processor, or any other form of providing information to an electrical device. The allowance is provided to a charger controller, which is connected to an actuator for moving the pantograph and/or connected to charging circuits responsible for providing charging current to the battery of the vehicle.

According to a further aspect, a use of a positioning system as described herein is provided. The positioning system comprises a static master module, a plurality of slave modules, and a mobile module for determining a position of the mobile module to provide an allowance for charging the vehicle.

These and other features, aspects and advantages of the present invention will become better understood with reference to the accompanying figures and the following description.

### Short Description of the Figures

Fig. 1 shows a block diagram of the electric vehicle charging system.
Fig. 2 shows a flow diagram of the method for providing an allowance for charging an electrical driven vehicle by a positioning system.
Fig. 3 shows a flow diagram of the determination of a single position within the method.
Fig. 4 shows a flow diagram of the method from view of the vehicle.
Fig. 5 shows a sketch of a vehicle and the charger.

### Detailed Description of Embodiments

Corresponding parts are provided with the same reference symbols in all figures.

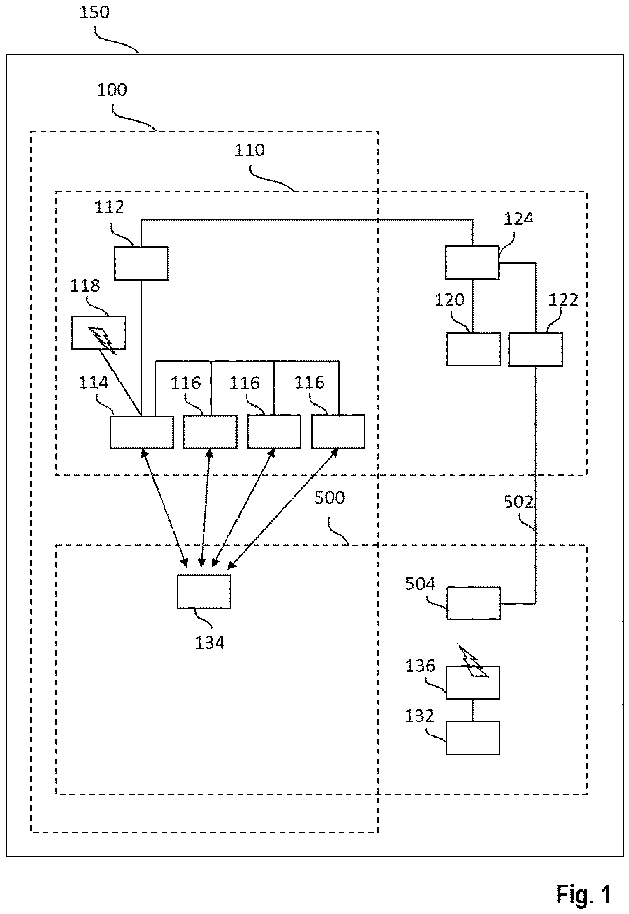

Fig. 1 shows a block diagram of the electric vehicle charging system 150. The system 150 comprises a charger 110, which may physically realized as a column with a cantilever at which a pantograph 502 is arranged. The pantograph 502 provides the conductive connection between the charger 110 and the vehicle 500, or in more detail, between the charging circuit 122 of the charger 110 and the battery 504. Therefore, the pantograph 502 is drawn as a line in Fig. 1. The charger 110 further comprises an actuator 120, which drives the movements of the pantograph 502 such as lowering the pantograph 502 so that it gets in contact with the vehicle 500. Furthermore, the charger 110 comprises parts of the positioning system 100. These parts include a charger-side control unit 112, a static master module 114 and slave modules 116. The charger-side control unit 112 is connected to the master module and controls the master module 114, checks matches such as positions and IDs, and provides signals such as an allowance signal to the charger controller 124, which controls the actuator 120 and the charging circuit 122. The slave modules 116 are connected via a serial bus, for example, a RS485 bus to the static master module 114. Moreover, the master module 114 is connected with a charger-side wireless communication module 118.

Vehicle 500 comprises parts of the positioning system 100, a battery 504, a vehicle-side control module 132, and the vehicle-side communication module 136 connected to the vehicle-side control module 132, which communicates wirelessly with the charger-side wireless communication module 118. The battery 504 drives the vehicle 500 and is the battery to be charged by the charger 110. The vehicle-side parts of the positioning system 100 include the mobile module 134. The charger-side positioning modules 114, 116 receive measurement signals, e.g. frames according to the IEEE-UWB-standard from the mobile module 134.

The functionalities of the components in Fig. 1 are presented in the following in more detail.

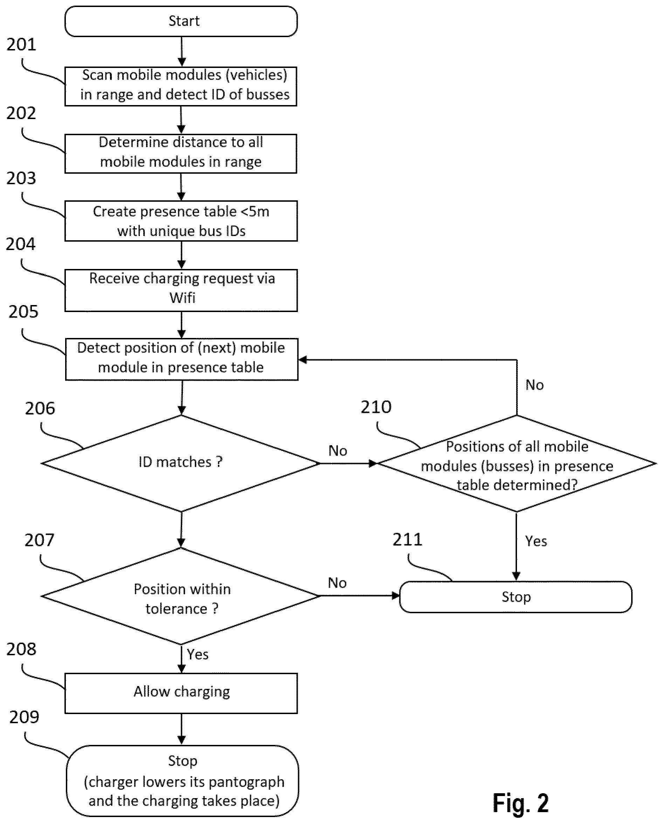

Fig. 2 shows a flow diagram of the method for providing an allowance for charging an electrical driven vehicle 500, for example a bus, by the positioning system 100. In a first step 201, the static master module 114 scans for mobile modules, such as module 134, in range. The mobile modules are associated to and mounted on a respective bus. Due to an association of the vehicle ID to an ID or address of a mobile module, the mobile modules and the bus are identifiable by a unique ID, which is stored, for example in the respective mobile modules, or a memory to which the static master module 114 has access. The mobile module 134 and the vehicle-side communication module 136 have the same bus ID stored in their memories. In step 202, the static master module 114 determines the distance to all mobile modules in range. For that, the charger-side control unit 112 is connected to the master module 114 of the positioning system 100, which is controlled by the charger-side control unit 112. The distance may be measured, for example, by measuring a run time of a signal emitted by the mobile module 134, or a roundtrip time. It is understood, that for measuring a run time, there have to be known time relations between master module 114 and mobile module 134, and at least the master module 114 and the slave modules 116 have to be synchronized. A known time relation is, for example, that the clocks of the master module 114 and the mobile module 134 are synchronized or differ by a known offset. Known algorithms may be used to estimate clock drifts, drift rates etc. The master module 114 and the mobile module 134 for determining the distance may be based on the IEEE UWB standard using a CSMA access protocol. In step 203, the static master module 114 creates a presence table, in which all mobile modules are entered that are within a pre-determined distance. The mobile modules may be entered, for example, in form of vehicle IDs. The pre-determined distance may be, for example 3 m, 5 m or 10 m. The pre-determined distance may be stored in a data storage, which is accessible by the static master unit 114. In step 204, the master module 114 receives a charging request via charger-side communication module 118, which again has received the charging request form the vehicle-side communication module 136. The charging request contains the ID of the bus 500. The communication modules 118, 136 may be, for example, WiFi modules, Bluetooth modules or communication modules according to any other communication standard suitable for communicating at least up to the pre-determined distance and capable of transmitting the ID of the bus 500. In steps 205 and 206, the master unit goes through the presence table and determines the position of all mobile modules in the table, one after the other. The master module provides the positions to the vehicle-side control unit 112. If, in step 206, the vehicle-side control unit 112 detects that the ID matches and that, in step 207, the position is within a pre-determined tolerance with respect to a reference position, for example, the position in which the center of the pantograph's rails meets the center of the vehicle rails in step 208, the vehicle-side control unit 112 allows the charging and sends a control signal to the charger controller 124. The charger controller 124 then performs in step 209 the sub-steps for charging the vehicle, which are essentially lowering down the pantograph and controlling the charging circuits.

Steps 205 and 206 may be implemented in a variety ways, which may depend, for example on the underlying positioning technique and standard. For example, if the module mobile can be addressed directly, the control unit may use the ID received from the communication module to check, whether the ID is contained in the table, and then to determine the position of the identified mobile module. In another embodiment, the ID is available only when the measurement is performed. This applies, for example, to UWB. In this case, the control unit 112 may receive the position of each mobile module that is contained in the table stored in the master module 114 and then checks, whether the ID matches. If the ID matches, the control unit 112 or the master module, respectively, might stop determining the positions of the remaining mobile modules, which IDs are stored in the table. If an ID did not match, but the position of all mobile modules has already been determined 210, the algorithm may stop the processing of the request in step 211. In a further embodiment, the static master module may continuously determine the positions of the listed mobile modules, for example, in order to track all listed mobile modules, and check at the same time whether the position is within the tolerance. In variants, other orders of the steps of the method shown in Fig. 2, and other policies may be followed. For example, steps 201-203 may be performed after receiving a charging request in step 204.

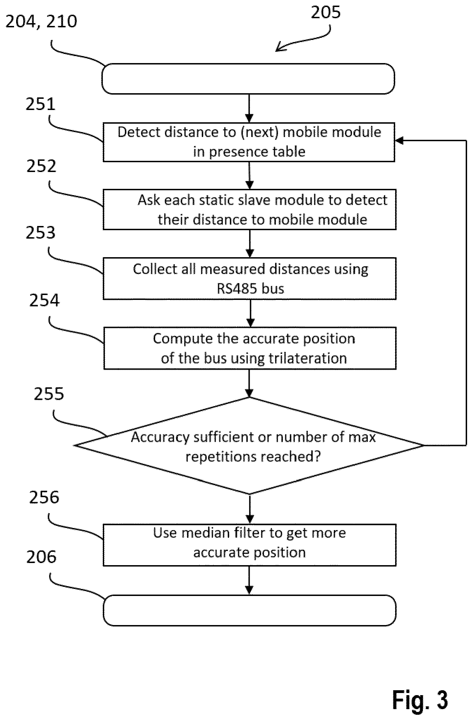

The determination 205 of the position of a mobile module may be performed according to the flow diagram shown in Fig. 3. The starting point are steps 204 or 205 of Fig. 2. The position determination is based on measuring distances by master module 114 and slave modules 116, and on trilateration using the measured distances. One of the distances to the mobile module 134 may be measured 251 by the master module 114 itself. The master module 114 may further request 252 each slave module 116 to perform a distance measurement to the mobile module 134, which is herein also referred to as the master module "sends a measurement request" to the slave modules. The master module 114 collects 253 the measurements from the slave modules 116 using, for example, an RS485 bus and computes 254 the accurate position using a trilateration algorithm. In order to improve the accuracy, steps 251 to 255 can be repeated a pre-determined number of times and a median filter can be used in step 256 to obtain a more accurate position. The number of slave modules 116 may be two or more. Especially if an over-determined system is available, clock errors can be eliminated and an equalization calculus may be performed. Further, other filters may be used. For example, weights may be used that depend on the geometry or non-linear filters may be used. In some cases, the accuracy can be improved by each iteration of the loop 251 ...255, and the criterion in step 255 is the accuracy or change of accuracy.

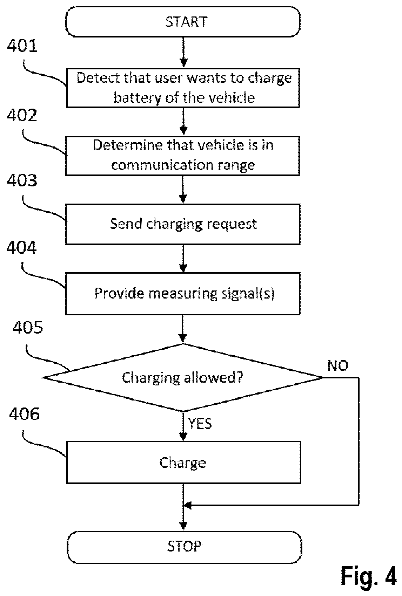

Fig. 4 shows a flow diagram of the method from view of the vehicle. In step 401, the vehicle-side control unit 132 of the bus 500 detects a request for charging from the user of the vehicle 500. In a variant, the request may be based on receiving a signal of another controller connected to the battery or an internal battery control circuit inside the bus 500. In step 402, the vehicle-side control unit 132 determines that it is in the range of the charger 110. This determination may be performed for example by detecting the charger-side communication module 118 of the charging system, or by receiving a signal from the positioning equipment such the UWB master module 114 of the charging system 100. In step 403, the vehicle-side control unit 132 sends a charging request via the vehicle-side communication module 136 to the charger-side communication module 118. The charging request contains the bus ID or an ID with which the bus ID can be retrieved. In step 404, the mobile module provides measurement signals, for example, as a response on received measurement signals from the charger-side measurement modules 114, 116. If, according to step 405, the charging is allowed, in step 406, the battery is connected to the pantograph and the battery is charged. This happens if the position is within a pre-defined tolerance determined by the positioning system, and the charging request has been sent within a predefined range from the charger or from a reference position of the charger, e.g., the above defined reference position, in which the center of the pantograph's rails meets the center of the vehicle rails, which has been determined by the vehicle-side control unit and which results in a connection with the pantograph 152.

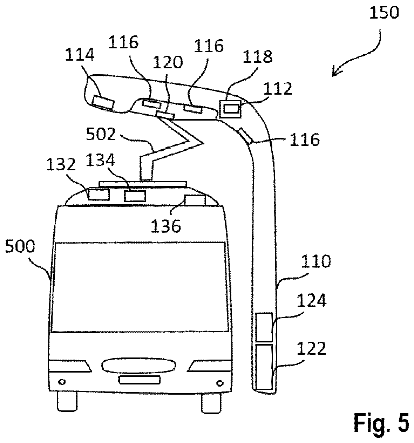

Fig. 5 shows a schematic diagram of an electric driven bus 500 and a charging station 150. The electric driven bus 500 includes a positioning system, which has components on the bus 500 and which has components on the charger 110. The components on the charger 110 include the charger-side control unit 112, the master module 114 for measuring a distance to the mobile module 134 on the bus and for commanding the slave modules 116 to perform further distance measurements to the mobile module 134. The charger 110 further includes slave modules 116, and charger-side communication module 118 for communicating with the vehicle-side communication module 136. In particular, the vehicle-side communication module 136 sends a charging request including a vehicle ID via the charger side communication module 118 to the charger-side control unit 112. The components on the bus 500 include the vehicle-side control unit 132, the mobile module 134 of the positioning system to which the distances to the master module 114 and slave modules 116 are determined.

Other variations to the disclosed embodiments can be understood and effected by those skilled in the art in practicing the claimed invention, from the study of the drawings, the disclosure, and the appended claims. In the claims, the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. Any reference signs in the claims should not be construed as limiting the scope of the claims.

### List of reference signs

- 100: Positioning system
- 110: Charger
- 112: Charger-side control unit
- 114: Static master module on charger / positioning module
- 116: Slave modules on charger / positioning module
- 118: Charger-side communication module
- 120: Actuator for pantograph
- 122: Charging circuits
- 124: Charger controller
- 132: Vehicle-side control unit
- 134: Mobile module on vehicle / positioning module
- 136: Vehicle-side communication module
- 150: Electric vehicle charging system
- 201...256: Steps of the method for providing an allowance for charging an electrical driven vehicle by a positioning system
- 401 ...406: Steps of the method for providing an allowance for charging an electrical driven vehicle by a positioning system from view of the vehicle
- 500: Vehicle/bus
- 502: Pantograph
- 504: Battery

## Claims

1. Positioning system (100) for an automatic vehicle charging system (500), wherein the positioning system (100) comprises
charger-side positioning modules (114, 116) comprising a static master module (114) and at least two slave modules (116) connected to the static master module (114), the charger-side positioning modules (114, 116) being arranged on a charger (110);
and a charger-side control unit (112) connected to the static master module (114);
wherein the static master module (114) is configured to
receive (204) a charging request from a vehicle (500) to be charged, wherein the charging request contains an ID of the vehicle;
receive (251, 252) distances to a mobile module (134) on the vehicle (500) or on a further vehicle, measured by the charger-side positioning modules (114, 116);
determine (254) a position of the mobile module (134) using the measured distances;
provide the position of the mobile module (134) to the charger-side control unit (112); and
wherein the charger-side control unit (112) is configured to
provide (208) an allowance for charging the vehicle (500) if the position of the mobile module (134) is within a pre-defined tolerance (207) with respect to a reference position and if the ID of the vehicle of which the position has been determined matches (206) with the ID in the charging request.

2. Positioning system (100) according to claim 1, wherein the positioning system (100) further comprises a charger-side communication module (118) connected to the static master module (114) and configured to receive the charging request from a vehicle-side communication module (136) of the vehicle (500) via a wireless communication.

3. Positioning system (100) according to claim 1 or 2, wherein
static master module (114) is further configured, upon receiving (204) the charging request from the vehicle (500) to send a distance measurement request (252) to the slave modules (116).

4. Positioning system (100) according to claim 3, wherein the static master module is configured to determine (202) a distance to the mobile module, and to send the distance measurement request to the slave modules (116) only if the distance between the static master module (114) and the mobile module (134) is below a pre-defined value.

5. Positioning system (100) according to any one of the previous claims, wherein the static master module (134) is further configured to:
initially (201), scan for mobile modules in range and detect the IDs of vehicles associated to the respective mobile modules;
determine (202) a distance to all mobile modules in range;
create (203) a presence table filled with the detected IDs for mobile modules whose distance to the static master module is below a pre-defined value; and after receiving (204) the charging request, to
determine (205) the positions of the mobile modules in the presence table one after another; and to
provide the positions to the charger-side control unit (112); and
wherein the charger-side control unit (112) is configured to:
compare (206, 207) the ID of the vehicle for which currently the position is determined with the ID contained in the charging request; and
provide the allowance for charging the vehicle (500) only if (207) additionally to the position of the vehicle being within a pre-defined tolerance, also (206) the ID contained in the request matches with the ID for the vehicle (500) for which currently the position is determined.

6. Positioning system according (100) to any of the previous claims, wherein the static master module (114) is further configured to receive repeatedly (253) distances measured by the slave modules (116) and to determine (254) repeatedly the position; and to use (256) a median filter over the repeatedly determined positions for determining a final position.

7. Positioning system (100) according to any one of the previous claims, wherein the static master module (114) is further configured to receive (253) all measured distances using an RS485 bus.

8. Positioning system (100) according to any of claims 3-7, wherein the static master module (114) and the plurality of slave modules (116) are modules according to the IEEE Ultra Wide Band (UWB)-standard, and wherein the charger-side wireless communication module (118) is a WiFi device.

9. Positioning system (100) according to any one of the claims 3-7, wherein the distances are measured using a CSMA protocol.

10. Positioning system (100) according to any of the previous claims, wherein the electric driven vehicle (500) is a bus.

11. Electric vehicle charging system (150) for charging automatically an electric driven vehicle (500), comprising a positioning system (100) and a charger-side control unit (112) according to any one of the previous claims; and further comprising a pantograph (502) including an actuator (120) and a charger controller (124), wherein the charger controller (124) is configured to
receive an allowance from the charger-side control unit (112) to charge the vehicle (500);
control the actuator (120) of the pantograph (502) to get in contact with the electric driven vehicle (500); and
provide the charging current for charging a battery (504) of the electric driven vehicle (500).

12. Electrical driven vehicle (500), wherein the electrical driven vehicle (500) comprises
a mobile module (134) of a positioning system (100) according to any of claims 1 to 10, wherein the mobile module (134) is configured to response for distance measurement requests sent from a static master module and/or a slave module;
a vehicle-side control unit (132) configured to send a charging request, the charging request including an ID of the electrical driven vehicle (500); and
a battery (500) configured to be connected to a pantograph (502) if a position determined by the positioning system (100) is within a pre-defined tolerance with respect to a reference position and if the ID of the vehicle of which the position has been determined matches (206) with the ID in the charging request.

13. Electrical driven vehicle (500) according to claim 12, wherein the electrical driven vehicle (500) further comprises a vehicle-side wireless communication module (136); wherein
the vehicle-side control unit (132) is further configured to cause the vehicle-side wireless communication module (136) to send a charging request, the charging request containing a vehicle ID that is detectible by a charger-side control unit (112) of the positioning system (100); wherein the sending of the vehicle ID is a pre-requisite for the battery (504) to get charged.

14. Method for providing an allowance for charging an electrical driven vehicle (500) by a positioning system (100) according to any one of claims 1 to 10 comprising a plurality of charger-side positioning modules (114, 116) comprising a static master module (114) and at least two slave modules (116) connected to the static master module (114), and a charger-side control unit (112); wherein the static master module (114)
receives (204) a charging request from the electric driven vehicle (500) to be charged;
receives (252) distances to at least the mobile module (134) measured by the charger-side positioning modules;
determines (205) a position of the mobile module (134); and
provides the positions to the charger-side control unit (112); and
wherein the charger-side control unit
compares the ID of the vehicle for which currently the position is determined with the ID contained in the charging request; and
provides (208) an allowance for charging the electric driven vehicle (500) if the position of the mobile module (134) is within a pre-defined tolerance (207) with respect to a reference position and if the ID of the vehicle of which the position has been determined matches (206) with the ID in the charging request.

15. Use of a positioning system (100) according to any one of claims 1-10 for an automatic vehicle charging system to provide for an allowance for charging the vehicle (500).
